# FASCICULE DE BREVET EUROPEEN

(11) **EP 2 908 918 B1**
(45) Date de publication et mention de la délivrance du brevet: **09.01.2019**
(21) Numéro de dépôt: 12886660.5
(22) Date de dépôt: 19.10.2012
(51) Int. Cl.: A63C 11/10, A63C 5/08, B62D 51/04, A63C 11/00, A63C 5/00, B62D 51/02, B62D 55/00, H01M 10/00, B62D 51/00, B60P 1/04, B62D 55/07, H01M 10/06, H01M 10/625, H01M 10/6561

(54) **UNITÉ MOTRICE COMPACTE INCLUANT DES CHENILLES JUXTAPOSÉES**
KOMPAKTANTRIEBSEINHEIT MIT NEBENEINANDERLIEGENDEN BAHNEN
COMPACT DRIVE UNIT INCLUDING JUXTAPOSED TRACKS

(43) Date de publication de la demande: 26.08.2015
(73) Titulaire: Martel, Yvon, Chicoutimi, Québec G7H 8C9 (CA)
(72) Inventeur: Martel, Yvon, Chicoutimi, Québec G7H 8C9 (CA)
(74) Mandataire: Grünecker Patent- und Rechtsanwälte PartG mbB
(86) Numéro de dépôt international: PCT/CA2012/050747
(87) Numéro de publication internationale: WO 2014/059511

(56) Documents cités:
- EP-A1- 2 239 182
- WO-A1-2008/000257
- CA-A1- 2 294 527
- CA-A1- 2 762 353
- CA-A1- 2 762 353
- JP-A- S61 188 281
- US-A1- 2007 209 847
- US-A1- 2011 163 588
- US-B1- 6 408 962
- US-B1- 6 408 962
- US-B1- 7 798 886
- US-B2- 7 434 644

## Description

### DOMAINE TECHNIQUE

Le domaine technique concerne, de façon générale, les appareils de traction compacts et les unités motrices compactes pouvant se déplacer sur des terrains difficiles, par exemple sur des terrains recouverts de neige, de sable, de boue, etc.

### ÉTAT DE LA TECHNIQUE

Plusieurs appareils ont été proposés au fil des années afin de permettre de circuler en terrains difficiles. Parmi ces appareils, plusieurs concernent des appareils compacts permettant une propulsion ou une traction d'une personne, notamment d'un skieur, à l'aide d'une chenille entraînée en rotation par un moteur. On en trouve des exemples dans les documents FR-2,431,304 (Jaulmes) publié le 15 février 1980 et US-4,519,470 (Allisio) publié le 28 mai 1985. De nombreux autres exemples existent. La plupart de ces appareils utilisent un moteur à essence pour entraîner la chenille en rotation. Certains utilisent un moteur électrique. Les appareils de ce genre peuvent être utiles comme moyens de locomotion légers, notamment là où il est difficile ou encore interdit de circuler à l'aide d'un véhicule plus gros. Par exemple, lorsqu'il s'agit de terrains dont la surface est enneigée, il peut arriver que la neige soit beaucoup trop poudreuse et profonde pour permettre la présence d'une motoneige. Un autre avantage de ces appareils est que leur transport dans un autre véhicule est beaucoup plus simple et facile que dans le cas d'un véhicule plus gros et plus lourd, par exemple une motoneige.

Malheureusement, aucun de ces appareils proposés antérieurement ne s'est révélé être entièrement bien adapté aux conditions hivernales très rigoureuses que l'on peut retrouver à certaines périodes de l'année dans les endroits où ces appareils sont susceptibles d'être utiles. Par exemple, une température très froide peut réduire considérablement la fiabilité et l'autonomie d'un appareil muni d'un moteur électrique alimenté par des batteries. Dans le cas d'un moteur à essence, la combinaison du froid extérieur et de la chaleur dégagée par le moteur peut occasionner des accumulations de glace et de neige compactée à des endroits sensibles de l'appareil. De plus, les températures moins froides sont davantage susceptibles d'occasionner des infiltrations d'eau dans l'appareil et ainsi causer des pannes qui peuvent être difficiles à réparer, surtout lorsqu'elles surviennent dans des endroits loin en forêt ou dans d'autres endroits difficiles d'accès.

Ces appareils proposés antérieurement ne permettaient pas non plus de transporter facilement un générateur électrique et/ou une charge utile à des endroits difficiles d'accès, par exemple des endroits dont l'espace est restreint, des terrains accidentés et/ou des terrains dont la surface est très molle.

La demande de brevet PCT publiée le 20 octobre 2011 sous le numéro WO 2011/127607 propose d'importantes améliorations au domaine technique concerné. Il s'agit d'une demande de brevet du même inventeur que la présente demande. La demande WO 2011/127607 décrit notamment différents modes de réalisation d'un appareil de traction compact selon le préambule de la revendication 1, pouvant se déplacer facilement sur des terrains difficiles, par exemple des terrains recouverts de neige, de sable, de boue, etc. Cet appareil ouvre la voie à de nombreuses autres améliorations dans le domaine des transports en général. Plusieurs solutions à des problèmes et des besoins spécifiques dans ce domaine général ont été identifiés, notamment celui d'avoir une unité motrice améliorée pouvant servir à de nombreuses réalisations.

### SOMMAIRE

Une unité motrice de transport peut inclure : deux appareils de traction compacts juxtaposés et jumelés de façon rigide, chaque appareil incluant : un boîtier étanche de forme allongée s'étendant dans un axe longitudinal et définissant une chambre interne, le boîtier ayant une paroi supérieure et une paroi inférieure; une chenille disposée autour du boîtier selon son axe longitudinal; un moteur d'entraînement de la chenille, le moteur étant situé dans la chambre interne du boîtier et incluant un arbre de sortie relié mécaniquement à la chenille; et un circuit de ventilation de la chambre interne du boîtier, le circuit de ventilation comprenant une entrée d'air et une sortie d'air qui communiquent avec l'extérieur du boîtier, le circuit de ventilation permettant de maintenir une température au-dessus du point de congélation à l'intérieur de la chambre interne lorsque la température extérieure est plus basse et permettant de refroidir l'intérieur de la chambre interne lorsque sa température est au-dessus d'une limite supérieure. Selon la revendication 1, il est proposé une unité motrice de transport, qui inclut : un boîtier étanche de forme allongée s'étendant dans un axe longitudinal et définissant une chambre interne, le boîtier ayant une paroi supérieure et une paroi inférieure; deux chenilles juxtaposées, disposées en parallèle autour du boîtier selon son axe longitudinal, permettant à l'unité motrice de se mouvoir lorsque les chenilles sont entraînées en rotation autour du boîtier; au moins un moteur d'entraînement de la chenille, le moteur étant situé dans la chambre interne du boîtier et incluant un arbre de sortie relié mécaniquement à au moins l'une des chenilles; et un circuit de ventilation de la chambre interne du boîtier, le circuit de ventilation comprenant une entrée d'air et une sortie d'air qui communiquent avec l'extérieur du boîtier, le circuit de ventilation permettant de maintenir une température au-dessus du point de congélation à l'intérieur de la chambre interne lorsque la température extérieure est plus basse et permettant de refroidir l'intérieur de la chambre interne lorsque sa température est au-dessus d'une limite supérieure.

Une méthode d'utiliser une unité motrice de transport du type comprenant au moins un boîtier étanche de forme allongée s'étendant dans un axe longitudinal et définissant une chambre interne dans laquelle est placé un moteur, et comprenant également deux chenilles juxtaposées disposées autour du boîtier selon son axe longitudinal et permettant à l'unité motrice de se mouvoir lorsqu'au moins l'une des chenilles est entraînée en rotation autour du boîtier à l'aide du moteur; la méthode peut comprendre les étapes simultanées suivantes : maintenir une température minimale dans la chambre interne en utilisant de la chaleur dégagée par le ou les moteurs; évacuer la chaleur dans la chambre interne si la température dépasse une valeur limite; maintenir une pression positive
dans la chambre interne lors de l'utilisation; utiliser simultanément les deux chenilles pour déplacer l'unité motrice; et déplacer au moins une charge utile placée temporairement sur l'unité motrice.

Une unité motrice telle que proposée précédemment peut être utilisée pour circuler sur un terrain enneigé et/ou accidenté et/ou boueux.

Davantage de détails sur ces aspects de même que sur d'autres aspects du concept proposé seront apparents à la lumière de la description détaillée qui suit et des figures en annexe.

### BRÈVE DESCRIPTION DES FIGURES

La figure 1 est une vue isométrique d'un exemple d'un appareil illustré dans la demande de brevet PCT publiée sous le numéro WO 2011/127607, cet exemple utilisant un moteur à essence;
La figure 2 est une vue de côté de l'appareil montré à la figure 1;
La figure 3 est une vue similaire à la figure 1 mais montre l'appareil sans sa chenille et sans les parois latérales sur les côtés de son boîtier;
La figure 4 est une vue similaire à la figure 3 mais montre le côté gauche de l'appareil vu de l'arrière;
La figure 5 est une vue du côté droit de l'appareil montré à la figure 3;
La figure 6 est une vue similaire à la figure 1 mais dans laquelle l'opérateur est debout dans un traîneau attelé à l'appareil;
La figure 7 est une vue similaire à la figure 3 mais montre un deuxième exemple d'appareil réalisé selon le concept proposé dans la demande de brevet PCT publiée sous le numéro WO 2011/127607, cet exemple utilisant un moteur électrique;
La figure 8 est une vue similaire à la figure 7 mais montre le côté gauche de l'appareil vu de l'arrière;
La figure 9 est une vue du côté droit de l'appareil montré à la figure 7;
La figure 10 est une vue semi-schématique de l'avant montrant un exemple d'une unité motrice compacte;
La figure 11 est une vue semi-schématique de côté montrant un autre exemple d'une unité motrice compacte selon le concept proposé, cette unité motrice incluant une benne basculante;
La figure 12 est une vue similaire à la figure 11 dans laquelle la benne est illustrée en position basculée;
Les figures 13 à 15 illustrent différentes configurations d'unité motrice de transport parmi lesquelles seule la figure 15 illustre une unité motrice de transport selon la revendication 1.
Les figures 16 à 21 sont des vues schématiques du dessus illustrant différents exemples de configuration à l'intérieur de l'unité motrice compacte mais parmi lesquelles seules les figures 19 à 21 illustrent des configurations selon le concept proposé.
La figure 22 est un schéma-bloc illustrant schématiquement un exemple de contrôle pour l'unité motrice;
La figure 23 est une vue du dessus d'un exemple d'unité motrice; et
La figure 24 est une vue similaire à la figure 23 et illustre un autre exemple d'unité motrice selon le concept proposé.

### DESCRIPTION DÉTAILLÉE

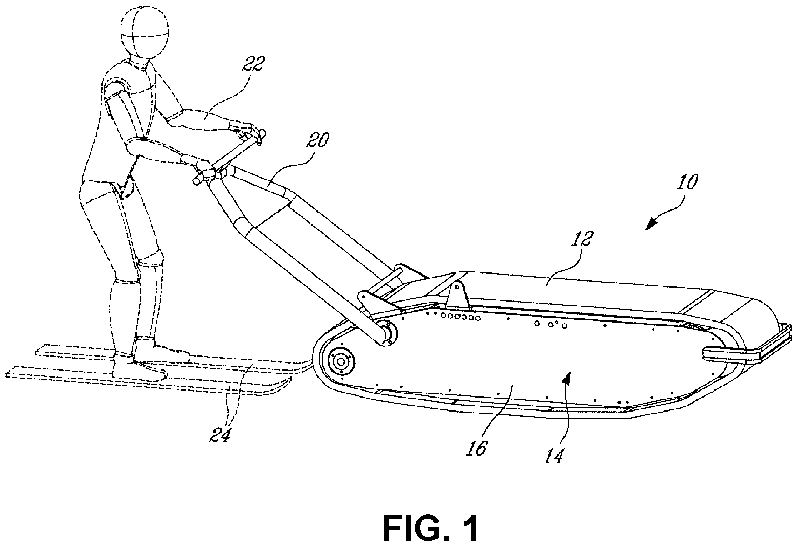

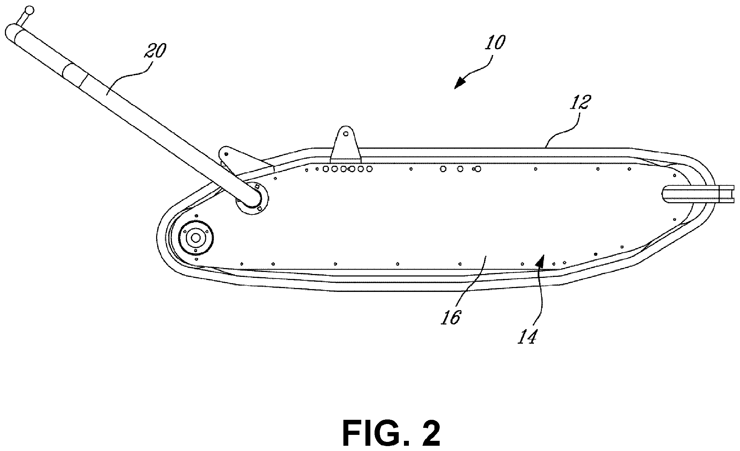

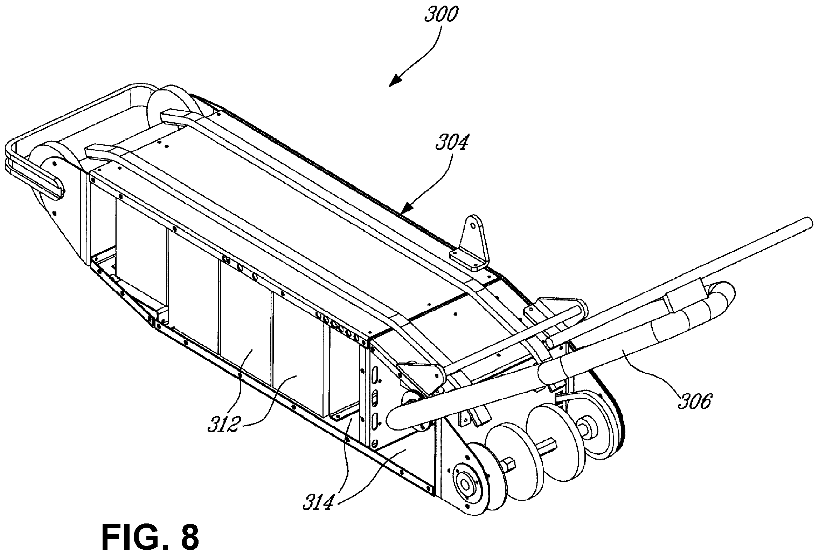

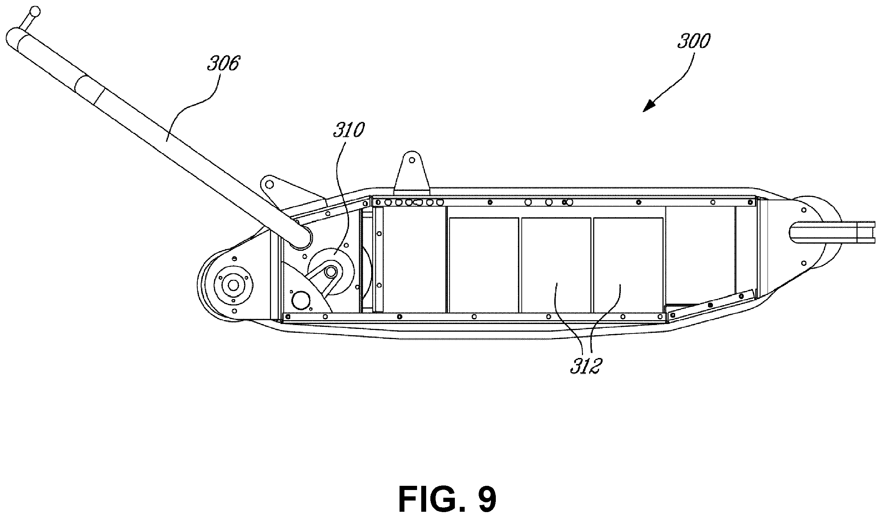

La figure 1 est une vue isométrique d'un exemple d'un appareil 10 illustré dans la demande de brevet PCT publiée sous le numéro WO 2011/127607. Les figures 2 à 9 sont également des vues provenant de cette même demande PCT. Les figures 1 à 9 ainsi que le texte descriptif ci-dessous au sujet de ces figures sont présentés à titre de référence. Le concept proposé dans la présente demande comprend des améliorations à ce qui est illustré aux figures 1 à 9 et ouvre de nouvelles possibilités.

Dans l'exemple de la figure 1, l'appareil 10 utilise un moteur à essence pour faire tourner une chenille 12 placée autour d'un boîtier étanche 14 ayant une forme allongée. Il est à noter à ce point-ci que la référence à un boîtier « étanche » signifie que sa construction est étanche mais n'exclut pas la présence d'un circuit de ventilation de l'intérieur du boîtier 14. Ce circuit de ventilation comprend au moins une entrée d'air et au moins une sortie d'air. Le circuit de ventilation permet notamment de refroidir l'intérieur du boîtier 14 lorsque sa température est au-dessus d'une limite supérieure, par exemple au-dessus de 25 °C. D'autres valeurs sont également possibles.

La rotation de la chenille 12 autour du boîtier 14 permet à l'appareil 10 de se mouvoir. Le boîtier 14 a une forme surbaissée afin de garder son centre de gravité le plus bas possible. Le boîtier 14 comprend une paroi latérale 16 de chaque côté, lesquelles peuvent être amovibles pour faciliter l'accès à l'intérieur. Le boîtier 14 peut être fait par exemple d'un matériau métallique, plastique ou les deux. L'aluminium est un exemple d'un matériau possible pour le boîtier 14 car ce matériau est léger et résistant. La chenille 12 peut être faite de caoutchouc ou d'un autre polymère. D'autres matériaux sont possibles.

L'appareil 10 de cet exemple comprend un guidon 20 qui est relié au boîtier 14. Le guidon 20 s'étend substantiellement vers l'arrière de l'appareil 10. Le guidon 20 est destiné à être tenu et manipulé par un opérateur 22 situé à l'arrière de l'appareil 10, comme illustré de façon semi-schématique à la figure 1. Le guidon 20 peut être pivotant ou fixe, selon les besoins. Lorsqu'il est pivotant, il est possible de limiter le pivotement du guidon 20 entre un angle minimum et un angle maximum par rapport à l'horizontale. Le guidon 20 pourrait aussi être omis dans certains modes de réalisation ou encore être remplacé par un autre dispositif.

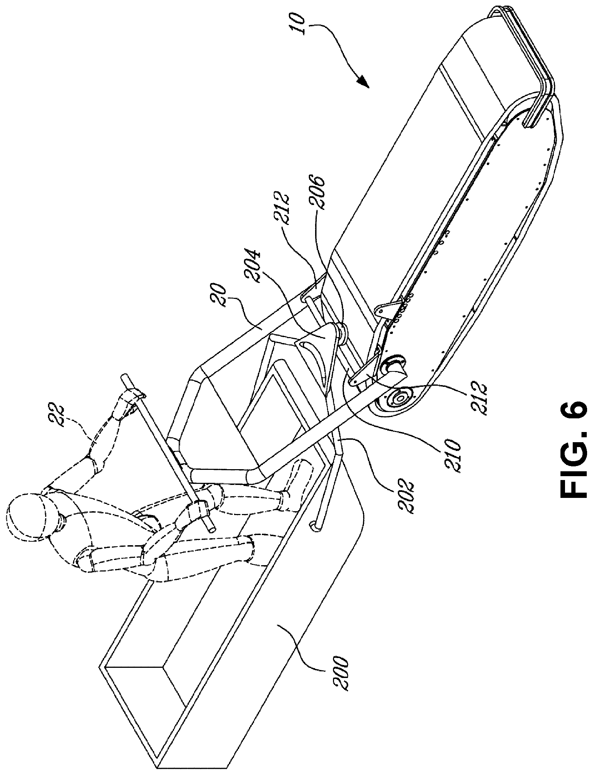

L'opérateur 22 peut porter des skis 24 (ou l'équivalent) ou encore être à bord d'un traîneau attelé à l'appareil 10 (figure 6). Comme on peut le constater à la figure 1, le centre de gravité de l'appareil 10 est sous la hauteur des genoux de l'opérateur 22.

L'opérateur 22 de l'appareil 10 illustré à la figure 1 dispose de contrôles (non illustrés) sur les poignées du guidon 20 lui permettant notamment de contrôler la vitesse de déplacement de l'appareil 10 et d'autres fonctions. Les contrôles peuvent être reliés au boîtier 14 à l'aide de fils et/ou de moyens de communications sans fil. Selon le modèle, il est notamment possible de prévoir un dispositif permettant à l'appareil 10 de reculer par la force de son moteur, ce qui peut s'avérer très utile dans certaines circonstances. Des leviers permettant d'activer un frein peuvent aussi être prévus. Ces leviers peuvent être disposés de façon similaire aux freins d'une bicyclette ou d'une moto, par exemple. D'autres éléments peuvent être montés sur le guidon 20 selon les besoins, notamment une lampe, des cadrans indicateurs, etc. Plusieurs autres variantes sont possibles.

Lorsqu'il circule vers l'avant, l'appareil 10 tire l'opérateur 22 et, s'il y a lieu, déplace une charge utile, par exemple une charge utile placée à bord d'un traîneau attelé à l'appareil 10. Un tel appareil 10 peut facilement tirer une charge équivalente à deux fois son poids dans de la neige poudreuse. Par exemple, des tests effectués à l'aide d'un appareil de 125 kg (275 lb) ont démontré qu'un tel appareil, même seul, pouvait tirer une charge de 225 kg (550 lb) sur une distance de 150 km avec un seul plein d'essence.

L'opérateur 22 de l'appareil 10 illustré à la figure 1 peut modifier la direction de déplacement de l'appareil 10 en bougeant latéralement le guidon 20 dans la direction opposée au virage à effectuer. Cette action est similaire à celle faite par l'opérateur d'une petite tondeuse à gazon conventionnelle. Des variantes sont également possibles.

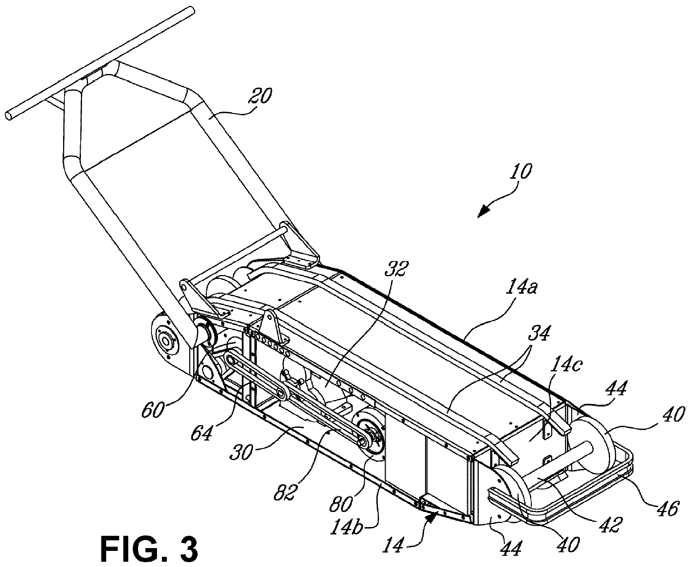

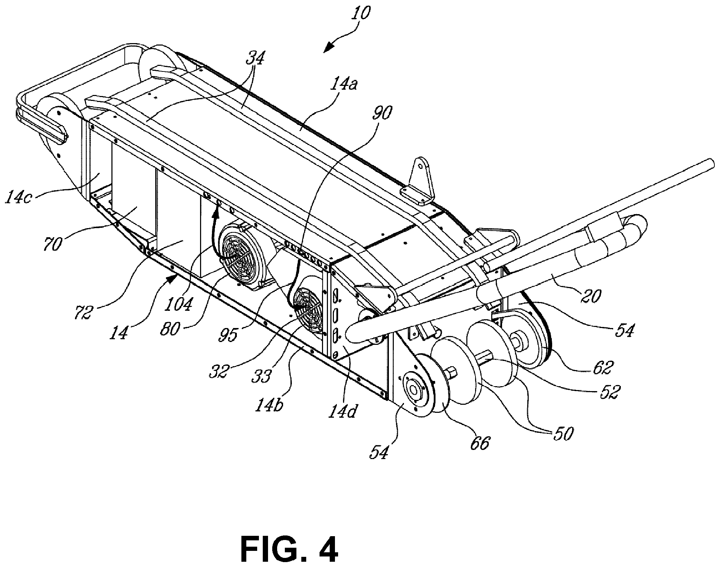

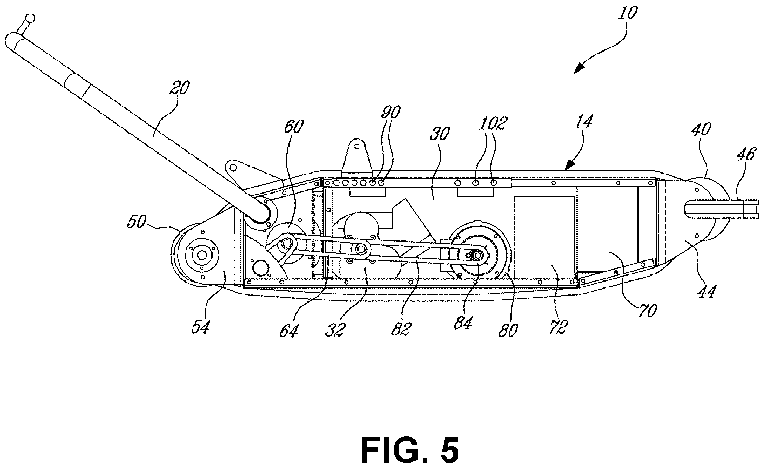

La figure 2 est une vue de côté de l'appareil 10 montré à la figure 1. Les figures 1 et 2 montrent l'appareil 10 assemblé. La figure 3 est une vue similaire à la figure 1 mais montre l'appareil 10 sans sa chenille 12 et sans les parois latérales 16 sur les côtés de son boîtier 14. La figure 4 est une vue similaire à la figure 3 mais montre le côté gauche de l'appareil 10 vu de l'arrière. La figure 5 est une vue du côté droit de l'appareil 10 montré à la figure 3.

Comme on peut le voir, en particulier aux figures 3 et 4, le boîtier 14 forme une chambre interne 30 dans laquelle sont placées différentes composantes de l'appareil 10, notamment son moteur à essence 32. Le boîtier 14 possède également une paroi supérieure 14a, une paroi inférieure 14b, une paroi avant 14c et une paroi arrière 14d. Le boîtier 14 possède une structure de renforcement, laquelle peut inclure une ou plusieurs parois internes pouvant compartimenter la chambre interne 30. Les compartiments communiquent entre eux.

Une paire de glissières supérieures 34 est disposée de façon longitudinale sur la paroi supérieure 14a du boîtier 14. Une paire de glissières inférieures, similaire à celle sur la paroi supérieure 14a, est disposée de façon longitudinale sur la paroi inférieure 14b du boîtier 14. Les glissières sont faites d'un matériau ayant un coefficient de friction très bas. Elles permettent notamment à la chenille 12 de tourner autour du boîtier 14 et de réduire la friction entre la face intérieure de la chenille 12 et l'extérieur du boitier 14. Elles servent aussi de guides pour garder la chenille 12 dans l'axe de l'appareil 10. Les glissières s'étendent sur quelques centimètres au-delà des extrémités avant et arrière des parois supérieure 14a et inférieure 14b afin de supporter la chenille 12 sur presque toute la longueur de l'appareil 10. Des variantes sont possibles.

Au moins un rouleau avant est monté en rotation à l'avant du boîtier 14. Dans l'exemple illustré, deux rouleaux avant 40 sont prévus. Les rouleaux avant 40 sont montés coaxialement autour d'un axe transversal avant 42, lequel est supporté par un axe interne graissé fixé à ses extrémités à deux plaques opposées 44 disposées parallèlement à l'axe longitudinal de l'appareil 10. Les plaques 44 sont reliées de façon rigide à l'avant du boîtier 14. Également dans l'exemple illustré, un pare-chocs 46 est prévu tout à l'avant de l'appareil 10. Les extrémités du pare-chocs 46 sont reliées aux deux plaques 44, telles que montrées notamment aux figures 3 et 4. Un dégagement suffisant est prévu entre l'intérieur du pare-chocs 46 et les rouleaux avant 40 pour permettre à la chenille 12 de tourner autour du boîtier 14 sans accrocher l'intérieur du pare-chocs 46. Des variantes sont également possibles.

Au moins un rouleau arrière est monté en rotation à l'arrière du boîtier 14. Dans l'exemple illustré, deux rouleaux arrière 50 sont prévus. Les rouleaux arrière 50 sont montés coaxialement autour d'un axe transversal arrière 52, lequel est supporté à ses extrémités par des roulements situés dans deux plaques opposées 54 disposées parallèlement à l'axe longitudinal de l'appareil 10. Les plaques 54 sont reliées de façon rigide à l'arrière du boîtier 14. Également dans l'exemple illustré, un lien mécanique est prévu entre l'arbre de sortie d'une transmission 60 située dans le boîtier 14 et l'axe transversal arrière 52. Les rouleaux arrière 50 sont donc utilisés pour entraîner la chenille 12 en rotation afin de pouvoir déplacer l'appareil 10. Différents types de liens mécaniques peuvent être utilisés entre la transmission 60 et l'axe transversal arrière 52. Celui qui est illustré comprend une courroie 62 ou une chaîne et permet une réduction de la vitesse de rotation entre l'arbre de sortie de la transmission 60 et l'axe transversal arrière 52. D'autres types de liens et configurations sont également possibles. Le lien mécanique entre le moteur 32 et la transmission 60 est assuré par une courroie 64. La transmission 60 peut permettre par exemple la marche avant et arrière. Elle peut avoir une ou encore plusieurs vitesses, ou bien être à vitesse variable. De nombreuses autres variantes sont possibles.

L'axe transversal arrière 52 supporte également un disque de frein 66, lequel est montré à la figure 4. Le disque est placé près de l'extrémité de gauche dans l'exemple. Les mâchoires du frein sont reliées au boîtier 14 et peuvent être actionnées par l'opérateur 22 à partir du guidon 20.

Le moteur d'entraînement 32 de la chenille 12 dans l'exemple des figures 1 à 4 est un moteur à essence placé directement à l'avant de la transmission 60. Une paroi transversale intermédiaire est présente dans l'exemple illustré afin de renforcer la partie entre le moteur à essence 32 et la transmission 60. Le moteur à essence 32 est alimenté en carburant à partir d'un réservoir 70 situé à l'avant de la chambre interne 30 de l'appareil 10. Une batterie 72 est placée à côté du réservoir à essence. Cette batterie 72 sert notamment à alimenter le démarreur électrique du moteur à essence 32. L'opérateur 22 peut ainsi démarrer et arrêter le moteur 32 sans avoir à y accéder directement. Des variantes sont également possibles.

L'appareil 10 des figures 1 à 5 intègre également un générateur 80 placé dans la chambre interne 30 et pouvant produire de l'électricité destinée à alimenter un ou des équipements externes à un voltage correspondant notamment à une prise de courant domestique, par exemple 110 V ou 220 V/240 V à 60 Hz ou encore à 50 Hz. Une ou des prises de courant sont disponibles sur l'appareil 10 ou encore sur le générateur 80 lui-même. Le générateur 80 comprend un rotor interne pouvant être entraîné en rotation à l'aide du même moteur à essence 32. La possibilité de générer de l'électricité à partir de l'appareil 10 peut être très avantageuse pour des utilisateurs tels que des ouvriers appelés à utiliser des outils électriques sur des sites isolés, ou encore des propriétaires de chalets situés loin des zones habitées. De très nombreuses autres utilisations peuvent être envisagées. Un générateur ayant une puissance de 4000 à 6000W peut être installé à l'intérieur même d'un appareil 10 de la taille représentée aux figures 1 à 5. L'utilisation d'un générateur plus petit ou même plus gros est aussi possible.

L'axe du générateur 80 est disposé transversalement à l'axe longitudinal de l'appareil 10 dans l'exemple. Le générateur 80 pourrait aussi être placé autrement dans certains modèles, par exemple en utilisant une boîte de renvoi à angle. Il est relié à l'arbre de sortie du moteur à essence 32 par une courroie de transmission 82. Un embrayage électrique 84 monté sur l'arbre du générateur 80 permet d'activer et de désactiver à distance le lien mécanique entre le générateur 80 et le moteur à essence 32. Ainsi, lorsque le générateur 80 n'a pas à être utilisé, par exemple lorsque l'appareil 10 est en déplacement, la rotation inutile du rotor du générateur 80 peut être évitée. Lorsque le générateur 80 est en fonction, la transmission 60 de l'appareil 10 est mise au neutre. Des variantes sont également possibles.

L'admission d'air neuf à l'intérieur de la chambre interne 30 du boîtier 14 se fait par une série d'ouvertures 90 prévues sur au moins un côté latéral du boîtier 14, immédiatement sous la paroi supérieure 14a. Les ouvertures 90 ont un diamètre relativement petit afin de permettre une diminution de l'ingestion de neige et de débris, par exemple des brindilles de bois ou autre. L'air qui passe par les ouvertures 90 entre dans une boîte d'admission 92 qui collecte l'air provenant de toutes les ouvertures 90 de chaque côté du boîtier 14. Lors de l'utilisation de l'appareil 10, la boîte d'admission 92 est chauffée par le dessous grâce à la chaleur dégagée par le moteur à essence 32 et qui circule dans la chambre interne 30. Cette chaleur permet de garder la chambre interne 30 bien au-dessus du point de congélation (0 °C) même si la température extérieure est très froide, par exemple sous le -20 °C. Grâce à cette chaleur, toute particule de neige qui entre dans la boîte d'admission 92 peut fondre et s'égoutter vers l'extérieur, et ce, même par temps froid. L'air sort de la boîte d'admission 92 par un tuyau de sortie 94 qui est circulaire dans l'exemple. Le haut du tuyau de sortie 94 peut être surélevé de plusieurs millimètres par rapport au fond de la boîte d'admission 92 afin d'éviter l'écoulement de l'eau directement vers la chambre interne 30.

L'appareil 10 inclut une boîte d'admission d'air. L'air qui sort de la boîte d'admission est ensuite canalisé dans un conduit flexible 95 (illustré de façon schématique à la figure 4) menant à l'entrée 33 de la volute du ventilateur de refroidissement intégrée au moteur à essence 32. Le ventilateur dans le moteur 32 génère ainsi la force de succion requise pour aspirer l'air par les ouvertures 90. L'air de refroidissement passe autour du ou des cylindres du moteur à essence 32 et aboutit ensuite à l'intérieur de la chambre interne 30.

Des variantes à ce qui est décrit dans les paragraphes précédents sont possibles.

La sortie de l'air de l'intérieur de l'appareil 10 s'effectue de deux façons. D'une part, la combustion de l'essence dans le moteur 32 génère des gaz d'échappement. L'air servant à cette combustion est admis à l'intérieur du moteur 32 à partir de l'intérieur de la chambre interne 30 ou peut aussi provenir directement de la boîte d'admission 92 dans le cas de certains moteurs. Les gaz d'échappement à la sortie du ou des cylindres du moteur 32 sont ensuite dirigés vers l'arrière de l'appareil 10 par un tuyau d'échappement. La sortie du tuyau d'échappement se situe dans un espace où se trouvent l'axe transversal arrière 52 et les deux rouleaux arrière 50. Cet espace est partiellement obstrué par la présence de la chenille 12 lorsque l'appareil 10 est assemblé. Cette configuration permet notamment de réduire le bruit et d'éviter tout contact possible de la peau ou des vêtements de l'opérateur 22 avec la sortie chaude du tuyau d'échappement. D'autres configurations sont également possibles.

De l'air est aussi évacué de l'intérieur de la chambre interne 30 par une sortie d'air qui fait partie du circuit de ventilation. L'air passant par la sortie traverse tout d'abord par le circuit de refroidissement du générateur 80 et circule ensuite par un conduit flexible 104 (représenté de façon schématique à la figure 4) jusqu'à l'entrée d'une boîte de sortie d'air 100. La boîte de sortie 100 a une construction similaire à celle de la boîte d'admission 92. L'air est ensuite évacué par des ouvertures 102 placées sur au moins un côté latéral du boîtier 14. Des variantes sont également possibles.

Lorsque le générateur 80 est en fonction, le ventilateur intégré au générateur 80 contribue au déplacement de l'air afin d'augmenter le débit d'air pour son refroidissement. Des ventilateurs additionnels placés en série sur les conduits flexibles reliés à l'entrée et à la sortie d'air peuvent permettre d'augmenter davantage la circulation d'air si la température dans la chambre interne 30 devient trop élevée. Ces ventilateurs peuvent être mis en marche automatiquement grâce à un thermostat muni d'une sonde de température ou d'un autre dispositif.

L'appareil 10 est configuré de telle sorte qu'une pression positive est créée dans la chambre interne 30. Cela est réalisé en prévoyant une surface totale d'admission de l'air plus grande que la surface totale de sortie. Dans l'exemple, le nombre d'ouvertures 90 est plus grand que le nombre d'ouvertures 102. La pression positive permet notamment d'obtenir une meilleure étanchéité du boîtier 14.

Lorsque l'appareil 10 est en mouvement, les côtés du boîtier 14 sont fermés de façon étanche à l'aide des parois latérales 16, lesquelles sont montrées aux figures 1 et 2. Ces parois latérales 16 sont visées ou autrement fixées au reste du boîtier 14. L'intérieur du boîtier 14 demeure ainsi étanche et sec lors de l'utilisation de l'appareil 10.

Tel qu'il est montré à la figure 5, le dessous du boîtier 14 est bombé en son centre. Cette surélévation est d'environ 3 cm à l'avant et à l'arrière de la chenille 12 dans l'appareil 10 montré en exemple. Cette partie centrale correspond environ au tiers de la longueur de l'appareil 10. La surélévation facilite notamment le mouvement de lacet lors des virages ainsi que le pivotement manuel de l'appareil 10 sur des surfaces dures et rugueuses, par exemple l'asphalte et le béton. De plus, l'avant de la paroi inférieure 14b définit un angle par rapport à l'horizontale. L'axe transversal avant 42 est ainsi plus haut que l'axe transversal arrière 52. Cela facilite aussi le passage par-dessus des obstacles. Des variantes sont également possibles.

La figure 6 est une vue similaire à la figure 1 mais dans laquelle l'opérateur 22 est debout dans un traîneau 200 attelé à l'appareil 10. L'attelage 202 du traîneau 200 est relié à un support 210 ayant la forme, dans l'exemple montré, d'une tige transversale droite ou encore légèrement recourbée vers l'arrière en son centre. La tige transversale 210 est soutenue par deux plaques correspondantes 212 projetant vers le haut du boîtier 14. L'attelage 202 comprend deux bras de retenue du traîneau 200, lesquels sont fixés à une plaque 204 qui peut pivoter autour d'un axe vertical à sa jonction avec un élément d'attache 206. L'élément d'attache 206 peut coulisser de gauche à droite le long de la tige transversale 210 grâce à des poulies placées de chaque côté de l'élément d'attache 206. Dans un virage, l'élément d'attache 206 peut alors se déplacer vers l'une des extrémités de la tige transversale 210, ce qui facilite la maniabilité de l'appareil 10 et diminue l'effort requis de la part de l'opérateur 22. Des variantes sont également possibles.

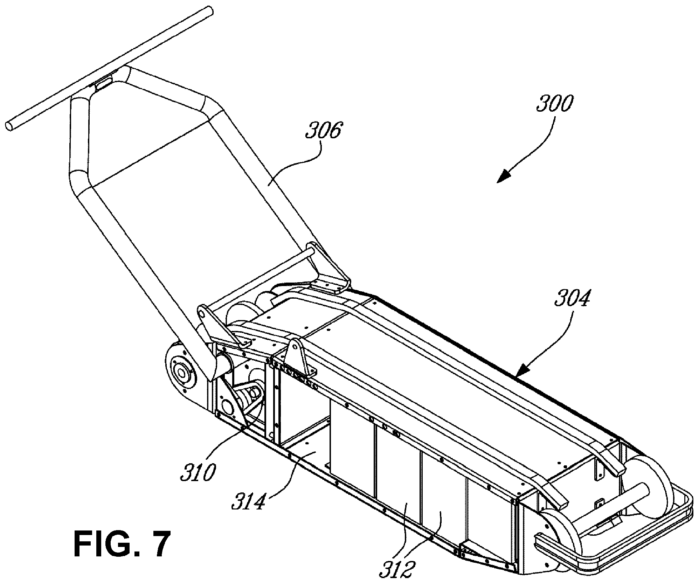

Les figures 7 à 9 montrent un deuxième exemple d'appareil 300 dans lequel un moteur électrique est utilisé. Cet appareil 300 est autrement similaire à l'appareil 10 de l'exemple précédant. L'appareil 300 comprend notamment une chenille 302, un boîtier étanche 304 et un guidon 306, lequel est tenu par un opérateur 308. L'appareil 300 peut aussi être utilisé avec le traîneau 200 de la figure 6.

La chenille 302 de l'appareil 300 est entraînée en rotation à l'aide d'un moteur électrique 310. Ce moteur 310 est alimenté en électricité par une ou plusieurs batteries 312, également placées dans la chambre interne 314 du boîtier 304. Le moteur électrique 310 peut être du type AC ou DC, avec ou sans aimants permanents. Un groupe de quatre batteries au plomb à décharge profonde 312 est montré dans l'exemple illustré. Le nombre et le type de batteries 312 peuvent différer selon les besoins. Les batteries 312 sont reliées à un contrôleur électrique actionné par l'opérateur 308 à partir des poignées du guidon 306. Les différentes connexions électriques ne sont pas illustrées dans les figures afin de simplifier les illustrations.

En cours d'utilisation, le moteur électrique 310 dégage de la chaleur. Cette chaleur représente souvent environ 10 % de l'énergie électrique puisée dans les batteries 312. La chaleur ainsi dissipée est utilisée dans la chambre interne 314 de l'appareil 300 pour tenir au chaud les batteries 312 lorsque la température extérieure est très froide. Cette chaleur permet alors de conserver une température optimale des batteries malgré le temps très froid. La température optimale peut être par exemple de l'ordre de 20 à 25 °C. D'autres températures sont aussi possibles. La récupération de cette chaleur est bénéfique car la plupart des batteries perdent leur efficacité par temps froid. C'est notamment le cas des batteries au plomb. Bien que des types de batteries plus performantes existent, les batteries au plomb demeurent un choix intéressant parce qu'elles sont facilement disponibles et relativement peu dispendieuses. Elles résistent mieux au froid que des batteries au nickel ou au lithium, par exemple. L'efficacité des batteries au plomb baisse cependant de façon presque linéaire en fonction de la température, passant par exemple de 100 % pour 25 °C à 30 % pour -40 °C, selon le type exact de batterie. La baisse d'efficacité a donc une incidence directe sur l'autonomie de l'appareil 300. En gardant la chaleur dans le boîtier 304 par temps froid, les batteries 312 peuvent alors conserver une efficacité nettement supérieure à celle qu'elles auraient à basse température. L'intérieur du boîtier 304 peut aussi être isolé pour aider à conserver la chaleur. Des variantes sont également possibles.

Un système interne de ventilation est prévu en cas de surchauffe, par exemple lorsque l'appareil 300 opère par temps doux et que le moteur électrique 310 est très sollicité. Ce système interne de ventilation fait partie du circuit de ventilation. Il peut comprendre un thermostat qui actionne au moins un ventilateur assurant un apport d'air de l'extérieur afin de dissiper la chaleur interne. L'entrée d'air et la sortie d'air peuvent être placées dans le haut du guidon 306 à une certaine distance l'un de l'autre. L'air circule alors dans les tuyaux formant les côtés du guidon 306. Le ou les ventilateurs peuvent être placés dans le boîtier 304 ou encore dans le guidon 306. La jonction entre le guidon 306 et le boîtier 304 est configurée afin de permettre un passage de l'air entre les deux. Ainsi, le boîtier 304 peut être construit de façon très étanche jusqu'à la hauteur de l'entrée et de la sortie d'air dans le guidon 306. Une pression positive est maintenue à l'intérieur de la chambre interne 314 afin de réduire les risques d'infiltration d'eau par des endroits qui ne seraient pas entièrement bien scellés. L'appareil 300 pourra même alors être immergé de façon ponctuelle, ce qui peut être requis par exemple lorsque l'appareil 300 doit franchir un ruisseau non gelé ou un autre point d'eau similaire.

Il est possible d'incorporer un élément chauffant, par exemple un câble chauffant, à l'intérieur du boîtier 304 afin de garder les batteries 312 au chaud lors de leur charge à l'extérieur par temps froid et aussi lors de leur entreposage extérieur.

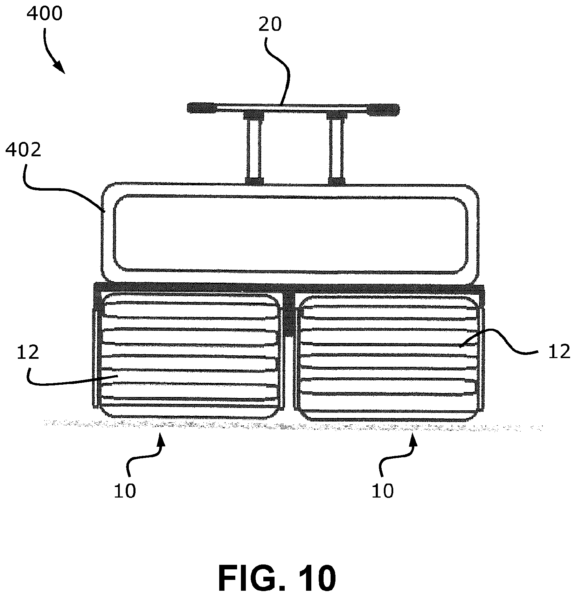

La figure 10 est une vue semi-schématique de l'avant montrant un exemple d'une unité motrice compacte 400 selon le concept proposé. Cette unité motrice 400 inclut deux appareils de traction compacts 10 comme base et aussi pour la motorisation. Les deux appareils 10 de l'unité motrice 400 sont juxtaposés et jumelés de façon rigide. Les boîtiers de ces appareils 10 font ainsi partie du châssis de l'unité motrice 400.

À la figure 10, les appareils 10 ont chacun un moteur à essence à l'intérieur. Leur configuration pourrait être par exemple similaire à celle montrée dans l'exemple des figures 3 à 5. De nombreuses variantes sont cependant possibles. Il pourrait même être possible d'utiliser plus de deux appareils 10 juxtaposés. Il faut donc comprendre que la référence à la présence de deux appareils 10 peut comprendre le cas où il s'agit de plus de deux appareils 10.

Dans l'exemple illustré à la figure 10, chaque appareil 10 inclut notamment un boîtier étanche, une chenille 12 disposée autour du boîtier selon son axe longitudinal, un moteur d'entraînement de la chenille 12 et un circuit de ventilation de la chambre interne du boîtier. Les deux chenilles 12 sont ainsi en juxtaposition et à faible distance l'une de l'autre. En outre, cette configuration permet de placer les chenilles 12 à une distance de 3 pouces (76 mm) ou moins entre leurs bords intérieurs respectifs. Il demeure possible de placer les chenilles 12 à une distance supérieure. Cependant, il a été constaté qu'une distance de 3 pouces (76 mm) ou moins est très avantageuse pour diminuer les probabilités ou même éviter complètement d'introduire des débris, par exemple des roches ou autres, dans l'espace intermédiaire. Un tel débris pourrait sinon bloquer l'unité motrice 400 et nécessiter une intervention de l'opérateur. Les chenilles 12 peuvent être rapprochées à très faible distance l'une de l'autre, cette distance pouvant même être inférieure à 1 mm dans certains modes de réalisation afin d'optimiser la flottabilité et diminuer toute possibilité d'enlisement sur les terrains mous. La distance minimale à maintenir va souvent dépendre de l'amplitude du déplacement latéral des chenilles 12 lors de leur utilisation. Même en utilisation normale, les chenilles 12 peuvent se déplacer légèrement de leur axe longitudinal, surtout par exemple lors des virages serrés. D'autres situations similaires existent aussi.

La figure 10 illustre également le fait que l'unité motrice 400 peut être configurée afin d'y recevoir un plateau de transport 402 ou toute autre structure du même genre qui peut être placé par-dessus les chenilles 12. Ce plateau de transport 402 permet d'y recevoir de l'équipement ou de matériaux, pour ne nommer que ces deux exemples. L'unité motrice 400 sert alors de véhicule de transport de charge. La capacité de chargement de l'unité motrice 400 est accrue de façon significative par le fait que deux appareils 10 sont jumelés. L'opérateur peut contrôler l'unité motrice 400 de différentes façons, par exemple, à l'aide du guidon 20. Le guidon 20 peut être déplacé latéralement afin de créer un moment de force forçant l'unité motrice 400 à tourner.

Certains modes de réalisation pourraient inclure des commandes au niveau du guidon 20. Il pourrait également être possible de placer les commandes ailleurs que sur le guidon 20. Les commandes de direction peuvent servir à faire tourner l'unité motrice 400 par la force mécanique provenant de l'unité motrice elle-même. Par exemple, la vitesse de rotation de l'une des chenilles 12 autour de son boitier pourrait être différente de la vitesse de rotation de l'autre chenille 12. Il pourrait même être possible d'arrêter la rotation de l'une des chenilles 12 alors que l'autre chenille 12 est en mouvement. Une autre possibilité est d'inverser le sens de rotation entre les deux chenilles 12. Cette asymétrie du mouvement des chenilles 12 va alors créer un moment de force pour changer la direction de l'unité motrice 400.

Pour parvenir à contrôler la rotation des chenilles 12 de façon indépendante l'une de l'autre, il est possible d'utiliser un moteur pour chacune des chenilles 12. Une autre possibilité est l'utilisation d'un différentiel qui, lorsqu'utilisé conjointement avec un système de freinage indépendant de chaque côté de l'unité motrice 400, comprenant un disque ou autre, permet d'induire une différence de vitesse de rotation entre les deux chenilles 12. Par exemple, dans ce cas, il serait possible de freiner la chenille 12 située à gauche afin d'augmenter la puissance transférée à la chenille 12 située à droite et ainsi créer un pivotement de l'unité motrice 400 vers la gauche. Pour tourner à droite, il suffit alors d'effectuer l'opération inverse, donc un freinage du côté droit. D'autres possibilités existent également. Par exemple, l'utilisation de commande électrique ou électronique est possible. Un exemple de commande électrique est une paire de potentiomètres, chacun placé sur l'une des poignées du guidon 20, afin de mesurer la position de leviers correspondants actionnés par l'opérateur. Un exemple de commande électronique est une manette de type « manche à balai » (« joystick », en anglais), qui permet un contrôle sans effort physique et de grande précision. On retrouve de tels dispositifs sur des chaises roulantes motorisées. L'utilisation d'une commande sous la forme d'un volant ou d'un guidon pivotant, comme celui d'une moto par exemple, est possible. Encore beaucoup d'autres variantes peuvent être envisagées.

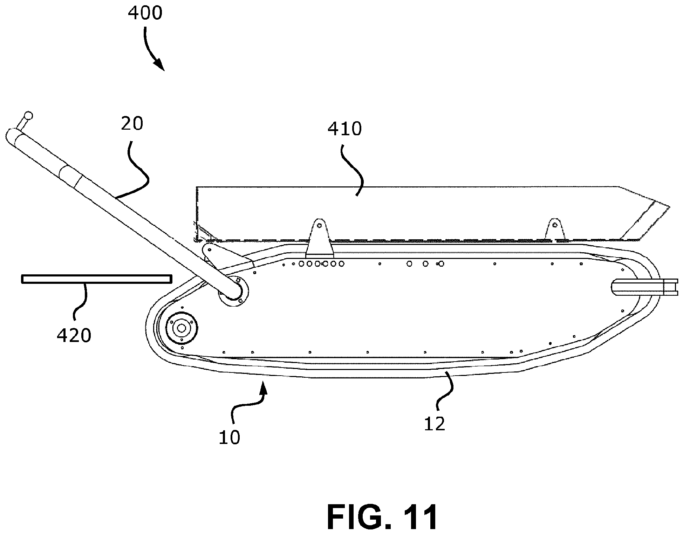

La figure 11 est une vue semi-schématique de côté montrant un autre exemple d'une unité motrice 400 selon le concept proposé. Cette figure illustre une unité motrice 400 munie d'une benne basculante 410 placée au-dessus. Cette benne basculante 410 est d'une largeur qui est équivalente à la largeur de l'unité motrice 400. D'autres configurations sont également possibles. L'ajout d'une benne basculante 410 à l'unité motrice 400 permet alors de transformer celle-ci en tombereau. Un tel tombereau peut être utilisé pour transporter des matériaux en vrac, par exemple, de la terre, du sable, du gravier, du bois, ou tout autre matériau ou cargaison à des endroits qui sont autrement difficiles d'accès à tout autre type de véhicule. La faible hauteur de la benne basculante 410 par rapport au sol permet de garder le centre de gravité extrêmement bas, ce qui augmente substantiellement la stabilité de l'unité motrice 400 en terrain accidenté ou surtout dans les pentes. Le centre de gravité est aussi très abaissé par le fait que toute la motorisation et les composantes les plus lourdes sont dans le boîtier, donc très près du sol. La faible hauteur de la benne basculante réduit aussi l'effort nécessaire pour y charger les matériaux, ce qui est un avantage très important pour faciliter le travail à accomplir lors du chargement. Cet avantage est également présent lorsqu'il s'agit d'un plateau de transport fixe 402 (figure 10) à la place d'une benne basculante 410.

La figure 11 illustre également, de façon schématique, une plateforme 420 sur laquelle l'opérateur peut se placer lors du déplacement de l'unité motrice 400, lui évitant ainsi de marcher derrière l'unité motrice 400. L'emplacement précis et la forme exacte de la plateforme 420 sont conçus de telle sorte que l'utilisateur puisse facilement y monter et y descendre. La plateforme 420 peut être omise dans certaines configurations mais elle demeure intéressante puisque l'unité motrice 400 sera souvent appelée à être utilisée sur des terrains difficiles, par exemple enneigés et/ou accidentés et/ou boueux, donc là où marcher pourrait être difficile. Un exemple de terrain accidenté est un terrain où on retrouve une grande quantité de roches, troncs d'arbres, trous dans le sol, etc. D'autres situations existent également. Dans le contexte du présent dossier, un terrain recouvert d'une couche de sable relativement épaisse est l'équivalent d'un terrain enneigé si le sable est sec, ou d'un terrain boueux si le sable est humide, mouillé ou recouvert d'eau.

Alternativement, l'unité motrice 400 pourrait être utilisée par un opérateur portant des skis, comme dans la figure 1, ou bien par un opérateur debout dans un traîneau, comme à la figure 6. Il est à noter que selon l'endroit où l'unité motrice 400 sera utilisée, le traîneau peut comprendre une ou plusieurs roues, donc être une remorque. Le traîneau pourrait aussi être muni de skis. Plusieurs autres variantes sont possibles.

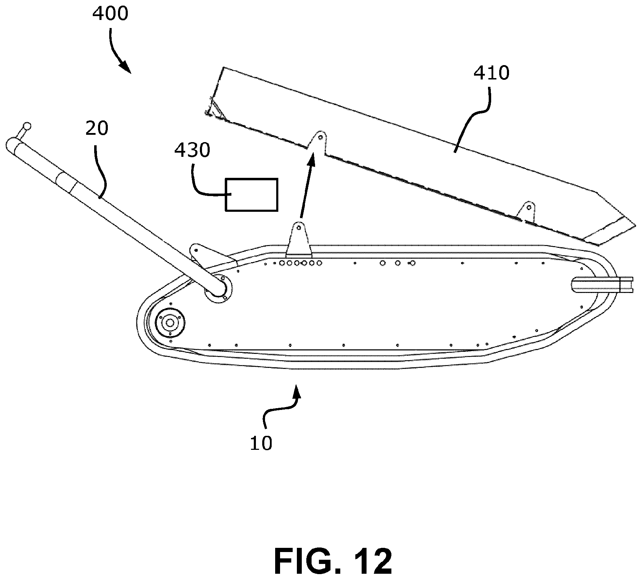

La figure 12 est une vue similaire à la figure 11 dans laquelle la benne 410 est illustrée en position basculée. Ce basculement peut être mécanisé ou non. Par exemple, dans le cas d'un basculement mécanisé, l'unité motrice 400 peut comprendre un système hydraulique, pneumatique ou autre pouvant être actionné à la demande par l'opérateur afin de modifier l'angle de la benne basculante 410 et ainsi pouvoir faire facilement tomber les matériaux à l'endroit souhaité. Ce système, intégré dans l'unité motrice 400, est schématisé par l'élément 430. Certaines configurations pourraient cependant ne pas nécessiter une mécanisation du basculement et plutôt nécessiter une opération entièrement manuelle de la part de l'opérateur. Dans un tel cas, un ou des ressorts pour compenser le poids de la benne pourraient être utilisés. D'autres variantes sont également possibles.

Il est à noter qu'à la figure 12, les pivots et autres attaches de la benne basculante 410 ne sont pas illustrés.

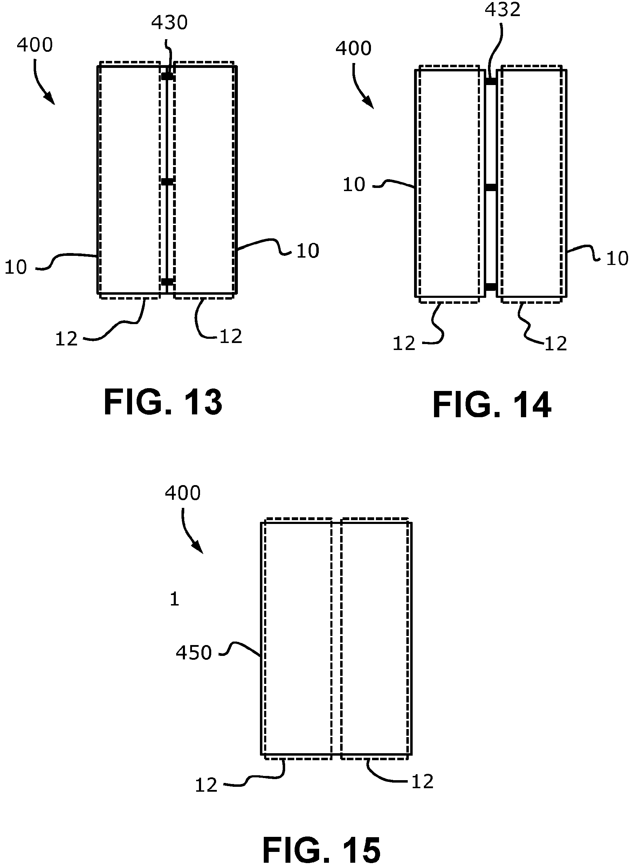

Les figures 13 à 21 sont des vues schématiques du dessus illustrant différents exemples de configuration de l'unité motrice compacte.

A la figure 13, les deux appareils juxtaposés sont fixés directement l'un à l'autre. Comme mentionné précédemment, les deux appareils 10 juxtaposés de la figure 10 sont jumelés de façon rigide, c'est-à-dire qu'ils sont entièrement solidaires l'un de l'autre. Il n'y a donc pas de pivotement, par exemple, l'un par rapport à l'autre. Ils peuvent être boulonnés directement l'un à l'autre, par exemple à l'aide de boulons 432 ou autres attaches, ou encore être interconnectés à l'aide d'un ou plusieurs éléments de connexion.

À la figure 14, les deux appareils 10 sont légèrement espacés et reliés par des connecteurs 432. Les figures 13 et 14 montrent également la position relative des chenilles 12.

La figure 15 présente un autre mode de réalisation possible. Il s'agit d'une unité motrice 400 dans laquelle la motorisation est placée dans un seul boitier 450. Toutefois, l'unité motrice 400 conserve la configuration dans laquelle les deux chenilles 12 sont juxtaposées et donc parallèles l'une à l'autre. L'avantage d'un unique boîtier 450 est l'espace plus grand qu'il offre. La configuration avec deux appareils 10 juxtaposés demeure quand même très intéressante car elle permet, lorsque des appareils 10 sont déjà construits en version à une seule chenille, d'utiliser au moins en partie des pièces existantes. Les parois et cloisons supplémentaires d'une version avec deux appareils 10 juxtaposés et jumelés vont aussi conférer une grande solidité et rigidité à l'unité motrice 400.

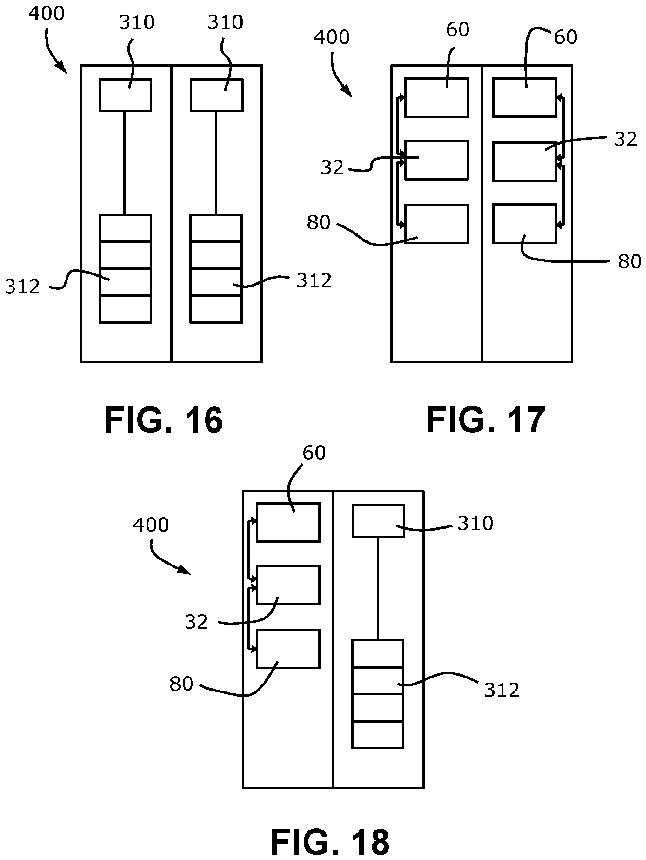

Dans le cas où deux appareils 10 sont juxtaposés, les deux appareils 10 peuvent être semblables ou de nature différente, selon les besoins. Par exemple, la figure 16 présente une vue schématique de deux appareils 10, chacun ayant un moteur électrique 310 et plusieurs batteries 312. Les batteries 312 servent à alimenter le moteur 310 correspondant. Il est cependant possible de prévoir des interconnexions entre les batteries 312 de chaque côté.

La figure 17 présente, de façon schématique, deux appareils 10 munis de moteurs à essence 32. Chaque moteur à essence 32 est relié à une transmission 60 correspondante. Également, dans cet exemple, chaque moteur à essence 32 peut aussi faire tourner un générateur 80 correspondant. Cette configuration permet de créer un tombereau dit « génératrice » lorsque l'unité motrice 400 est munie d'une benne basculante comme aux figures 11 et 12. Le générateur 80 pourrait toutefois être omis dans un ou les deux appareils 10, selon les besoins.

Une configuration comme montrée à la figure 17 peut nécessiter de modifier la disposition interne de certains éléments dans l'un des deux appareils 10 lorsque le design de ces modèles a été fait pour une chenille unique. Les éléments sont alors déplacés pour tenir compte du fait que l'appareil 10 se trouve à la gauche ou à la droite dans l'unité motrice 400, selon le cas. Les ouvertures pour l'entrée d'air doivent aussi préférablement être du côté latéral extérieur. Par contre, la sortie d'air et même l'échappement des moteurs à essence 32 peuvent être mis en commun entre les deux appareils 10, si nécessaire. Il est possible par exemple de prévoir une sortie commune dans l'espace intermédiaire, donc entre les boîtiers des deux appareils 10. Il est aussi possible de prévoir une sortie de l'échappement sur le côté latéral respectif, ou encore sur un seul des deux côtés latéraux.

À la figure 18, l'un des deux appareils 10 est muni de moteur à essence 32 avec générateur 80, et l'autre appareil 10 comprend un moteur électrique 310 et des batteries 312.

Que ce soit dans l'une ou l'autre des configurations possibles avec appareils 10 juxtaposés, par exemple celles montrées aux figures 16 à 18, certains des espaces, voire tous les espaces à l'intérieur des boîtiers peuvent être reliés par des ouvertures et/ou des conduits, afin que la pression soit la même de l'un à l'autre lorsqu'une pression positive est maintenue en opération. Le circuit de ventilation de chaque appareil 10 peut donc être mis en commun, chacun formant alors une partie du circuit de ventilation de l'ensemble de l'unité motrice 400.

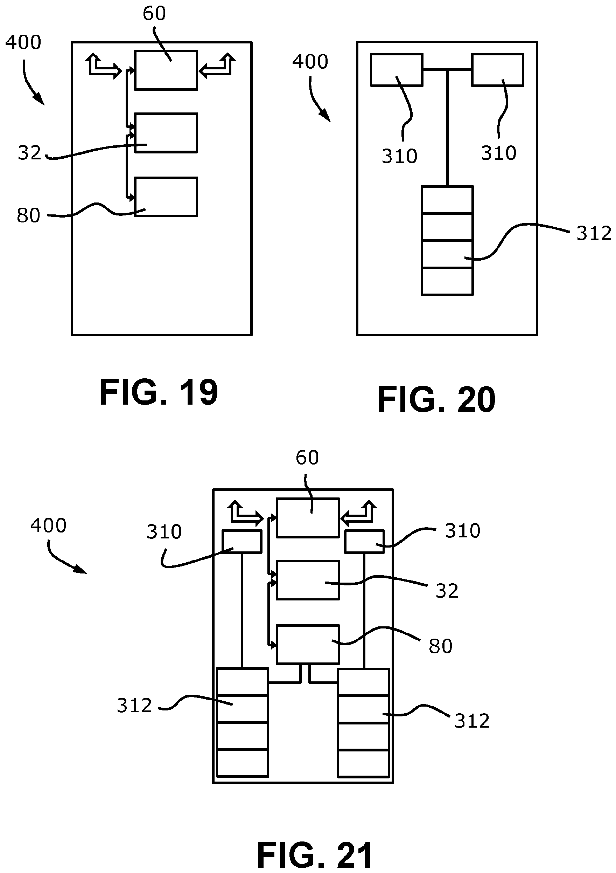

À la figure 19, l'unité motrice 400 comprend un seul moteur à essence 32, lequel est relié à une transmission 60 et également, dans cet exemple, à un générateur 80. La transmission 60 envoie de la puissance motrice à chaque chenille 12. Il peut également comprendre un différentiel afin que la vitesse de rotation des chenilles 12 puisse être différente. Néanmoins, dans certaines applications, en particulier lorsque les poids transportés sont relativement petits, il pourrait y avoir simplement une transmission sans différentiel. La vitesse de rotation des chenilles 12 serait alors toujours identique. Dans ce cas, l'opérateur pourra faire tourner l'unité motrice 400 de façon manuelle, par exemple en déplaçant le guidon 20 latéralement.

La configuration schématisée à la figure 19 permet de transporter un générateur 80 de relativement grande puissance électrique à l'intérieur même l'unité motrice 400. Le générateur 80, ainsi que toutes les autres composantes, se trouvent alors bien protégé et à l'abri dans le boîtier.

La figure 20 illustre un boitier unique 450 similaire à celui de la figure 19 mais dans lequel les moteurs sont des moteurs électriques 310 et alimentés par des batteries 312. Il est également possible de ne prévoir qu'un seul moteur électrique 310 dans certains modes de réalisation.

Cette configuration permet de créer un tombereau électrique lorsque l'unité motrice 400 est munie d'une benne basculante 410 comme aux figures 11 et 12. Le plus grand volume du boîtier 450 schématisé à la figure 20 peut permettre l'utilisation de plus grosses batteries 312, donc des batteries plus puissantes que dans le cas des appareils 10 juxtaposés. Dans un cas comme dans l'autre, il serait possible de prévoir un convertisseur d'énergie électrique, par exemple DC à AC, afin d'alimenter une prise électrique à un voltage domestique ou autre.

La figure 21 est une vue schématique d'un mode de réalisation dans lequel on retrouve à la fois un moteur à essence 32, un générateur 80, deux moteurs électriques 310 et deux ensembles de batteries 312. Il s'agit donc d'un modèle d'unité motrice 400 dite « hybride ». Dans ce cas, l'opérateur et/ou un système de commande peuvent déterminer lequel des deux modes (mécanique ou électrique) doit être utilisé. Il pourrait même être possible d'utiliser les deux en même temps.

De nombreuses autres configurations sont possibles. Par exemple, il pourrait y avoir un moteur à essence 32 qui n'est relié qu'à un générateur 80, dont le moteur à essence 32 ne fait pas directement tourner les chenilles 12 par un lien mécanique. La puissance pour déplacer les chenilles 12 est alors fournie par les moteurs électriques 310.

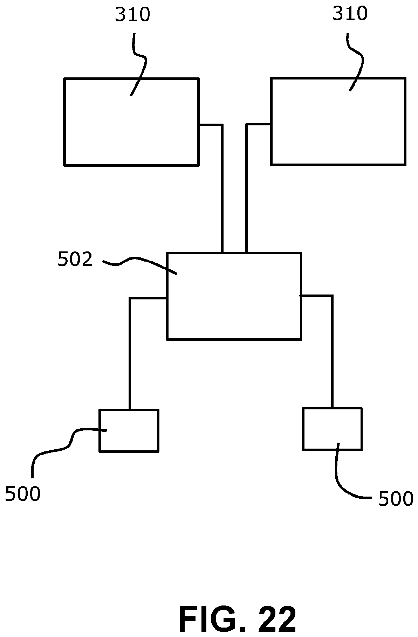

La figure 22 est un schéma-bloc illustrant schématiquement un exemple de contrôle de l'unité motrice 400. Dans cet exemple, des potentiomètres 500 sont placés sur les poignées du guidon 20. Chaque potentiomètre 500 mesure la position d'un levier de commande correspondant et transmet des signaux électriques ou autres à une unité de contrôle 502, par exemple un ordinateur de bord ou un circuit électronique dédié. Ces signaux sont interprétés par l'unité de contrôle 502 afin de déterminer la vitesse de rotation de chaque chenille 12. Les signaux de commande sont acheminés dans cet exemple à des moteurs électriques 310, chaque moteur 310 correspondant à l'une des chenilles 12. Beaucoup d'autres variantes sont possibles. Ceci inclut même des commandes de type mécanique entre les poignées et l'unité de commande. Les leviers des poignées pourraient en effet déplacer des tiges métalliques qui transmettent mécaniquement la position de chaque levier à un autre endroit de l'unité motrice 400.

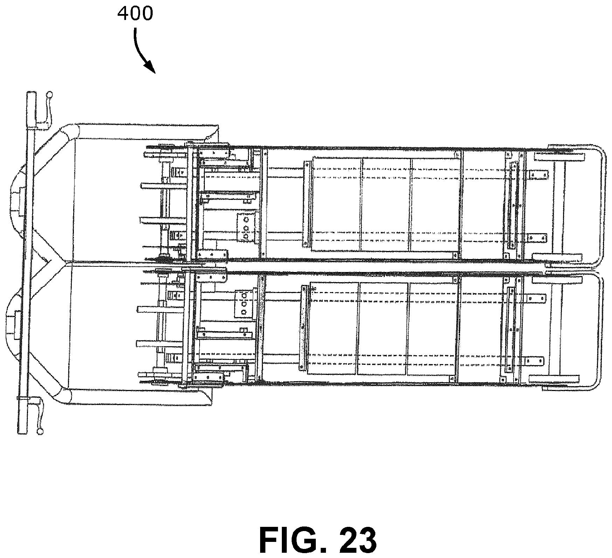

La figure 23 est une vue du dessus d'un exemple d'unité motrice 400. Cette version est sensiblement celle montrée de façon schématique à la figure 16. Elle comprend deux appareils 10 juxtaposés. Chaque appareil 10 inclut un moteur électrique 310 et un jeu de batteries 312 correspondantes.

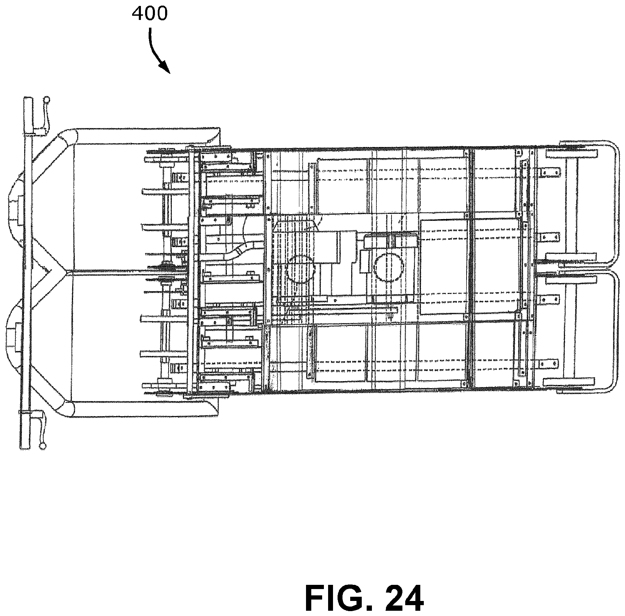

La figure 24 est une vue similaire à la figure 23 et illustre un autre exemple d'unité motrice 400 selon le concept proposé. Cette version est sensiblement celle montrée de façon schématique à la figure 19. Elle comprend un moteur à essence 32, un générateur 80 et une transmission 60. Les différentes composantes sont disposées pour équilibrer le poids d'une façon optimale. Par exemple, le moteur à essence 32 et le générateur 80 sont placés le long de l'axe central de l'unité motrice 400.

Le concept proposé permet donc de construire des unités motrices 400 très compactes, très performantes et offrant une flottabilité optimale tout en gardant des dimensions réduites afin de pouvoir atteindre des endroits très restreints en terme d'espace. Contrairement aux appareils proposés antérieurement, les chenilles 12 peuvent facilement couvrir presque toute la surface directement sous l'unité motrice 400 et faire en sorte que la hauteur du centre de gravité est à minimum inégalé. Des charges utiles très lourdes peuvent donc être facilement transportées à des endroits où il était pratiquement impossible d'aller auparavant.

La présente description détaillée et les figures en annexe ne sont que des exemples. Une personne oeuvrant dans le domaine saura reconnaître que des variantes peuvent y être apportées tout en restant dans le cadre du concept proposé.

### NUMÉROS DE RÉFÉRENCE

- 10: appareil
- 12: chenille
- 14: boîtier étanche
- 14a: paroi supérieure
- 14b: paroi inférieure
- 14c: paroi avant
- 14d: paroi arrière
- 16: paroi latérale
- 20: guidon
- 22: opérateur
- 24: skis
- 30: chambre interne
- 32: moteur d'entraînement
- 33: entrée de volute
- 34: glissière supérieure
- 40: rouleau avant
- 42: axe transversale avant
- 44: plaque
- 46: pare-chocs
- 50: rouleau arrière
- 52: axe transversal arrière
- 54: plaque
- 60: transmission
- 62: courroie ou chaîne
- 64: courroie
- 66: disque de frein
- 70: réservoir
- 72: batterie
- 80: générateur
- 82: courroie de transmission
- 84: embrayage électrique
- 90: ouverture
- 92: boîte d'admission
- 94: tuyau de sortie
- 95: conduit flexible
- 100: boîte de sortie d'air
- 102: ouverture
- 104: conduit flexible
- 200: traîneau
- 202: attelage
- 204: plaque
- 206: élément d'attache
- 210: support / tige transversale
- 212: plaque
- 300: appareil
- 302: chenille
- 304: boîtier étanche
- 306: guidon
- 308: opérateur
- 310: moteur électrique
- 312: batterie
- 314: chambre interne
- 400: unité motrice compacte
- 402: plateau de transport
- 410: benne basculante
- 420: plateforme
- 430: système pour modifier l'angle de la benne basculante
- 432: connecteur
- 450: boîtier unique
- 500: potentiomètre
- 502: unité de contrôle

## Revendications

1. Une unité motrice de transport (400), qui inclut :
un boîtier étanche (14, 304) de forme allongée s'étendant dans un axe longitudinal et définissant une chambre interne (30, 314), le boîtier (14, 304) ayant une paroi supérieure (14a) et une paroi inférieure (14b);
au moins un moteur d'entraînement (32, 310) de chenille (12), le moteur (32, 310) étant situé dans la chambre interne (30, 314) du boîtier (14, 304) et incluant un arbre de sortie relié mécaniquement à au moins une chenille (12);
un circuit de ventilation de la chambre interne (30, 314) du boîtier (14, 304), le circuit de ventilation comprenant une entrée d'air et une sortie d'air qui communiquent avec l'extérieur du boîtier (14, 304), le circuit de ventilation permettant de maintenir une température au-dessus du point de congélation à l'intérieur de la chambre interne (30, 314) lorsque la température extérieure est plus basse et permettant de refroidir l'intérieur de la chambre interne (30, 314) lorsque sa température est au-dessus d'une limite supérieure;
**caractérisée en ce que** l'unité motrice de transport (400) inclut en outre :
deux chenilles (12) juxtaposées, disposées en parallèle autour du boîtier (14, 304) selon son axe longitudinal, permettant à l'unité motrice (400) de se mouvoir lorsque les chenilles (12) sont entraînées en rotation autour du boîtier (14, 304) par ledit au moins un moteur d'entraînement (32, 310);
un plateau de transport (402) placé par-dessus les chenilles (12) et qui est relié au boîtier (14, 304); et
une benne basculante (410) montée sur le plateau de transport (402).

2. L'unité motrice (400) selon la revendication 1, **caractérisée en ce qu'**elle inclut :
deux paires de glissières supérieures (34) disposées de façon longitudinale sur la paroi supérieure (14a) du boîtier (14, 304);
deux paires de glissières inférieures disposées de façon longitudinale sur la paroi inférieure (14b) du boîtier (14, 304);
au moins un rouleau avant (40) monté en rotation à l'avant du boîtier (14, 304); et
au moins un rouleau arrière (50) monté en rotation à l'arrière du boîtier (14, 304);
chaque chenille (12) comprenant une face intérieure qui est supportée par les glissières (34) et les rouleaux (40, 50) correspondants.

3. L'unité motrice (400) selon la revendication 2, **caractérisée en ce qu'**elle inclut une transmission (60) assurant au moins une partie du lien mécanique entre le moteur (32, 310) et la chenille (12) correspondante, la transmission (60) étant préférablement reliée mécaniquement au rouleau arrière (50).

4. L'unité motrice (400) selon l'une quelconque des revendications 1 à 3, **caractérisée en ce qu'**elle comprend au moins un générateur (80) placé dans la chambre interne (30, 314), le générateur (80) produisant préférablement de l'électricité à un voltage correspondant à une prise de courant domestique.

5. L'unité motrice (400) selon la revendication 4, **caractérisée en ce que** le générateur (80) comprend un axe de rotation disposé de façon transversale à l'axe longitudinal du boîtier (14, 304).

6. L'unité motrice (400) selon la revendication 5, **caractérisée en ce que** ledit au moins un moteur d'entraînement est un moteur à combustion interne (32), et **en ce que** le générateur (80) et le moteur à combustion interne (32) sont reliés mécaniquement par l'intermédiaire d'un embrayage électrique (84).

7. L'unité motrice (400) selon l'une quelconque des revendications 1 à 6, **caractérisée en ce que** la chambre interne (30, 314) est maintenue à une pression positive relativement à la pression atmosphérique.

8. L'unité motrice (400) selon l'une quelconque des revendications 1 à 7, **caractérisée en ce qu'**elle inclut un guidon (20, 306) relié au boîtier (14, 304) et s'étendant substantiellement vers l'arrière, l'unité motrice (400) comprenant préférablement un frein (66) actionnable à partir du guidon (20, 306).

9. L'unité motrice (400) selon l'une quelconque des revendications 1 à 8, **caractérisée en ce qu'**elle comprend un élément chauffant placé dans la chambre interne (30, 314) et pouvant être alimenté en électricité de l'extérieur pour conserver une température minimale lorsque l'unité motrice (400) n'est pas en utilisation.

10. L'unité motrice (400) selon la revendication 9, **caractérisée en ce que** l'unité motrice (400) est configurée pour servir de tombereau, la benne basculante (410) étant préférablement pivotée mécaniquement par un dispositif de motorisation (430) placé sur l'unité motrice (400).

11. L'unité motrice (400) selon l'une quelconque des revendications 1 à 10, **caractérisée en ce que** l'unité motrice (400) inclut une plateforme arrière (420) pour transporter un opérateur (22, 308).

12. L'unité motrice (400) selon l'une quelconque des revendications 1 à 11, **caractérisée en ce que** le boîtier (14, 304) comprend des parois latérales amovibles (16).

13. L'unité motrice (400) selon l'une quelconque des revendications 1 à 12, **caractérisée en ce que** l'unité motrice (400) comprend un support (210) destiné à recevoir une extrémité d'un attelage (202) d'un traîneau (200).

14. L'unité motrice (400) selon la revendication 13, **caractérisée en ce que** le support (210) comprend une tige transversale reliée au haut du boîtier (14, 304), la tige transversale et l'extrémité de l'attelage (202) étant préférablement reliées de façon coulissante.

15. L'unité motrice (400) selon l'une quelconque des revendications 1 à 14, **caractérisée en ce que** le boîtier (14, 304) est fait au moins partiellement d'aluminium.

## Patentansprüche

1. Eine Transportantriebseinheit (400), die Folgendes umfasst:
ein langgestrecktes abgedichtetes Gehäuse (14, 304), das sich in einer Längsachse erstreckt und eine innere Kammer (30, 314) definiert, wobei das Gehäuse (14, 304) eine obere Wand (14a) und eine untere Wand (14b) aufweist;
mindestens einen Motor (32, 310) zum Antrieb einer Laufkette (12), wobei der Motor (32, 310) in der inneren Kammer (30, 314) des Gehäuses (14, 304) angeordnet ist und eine Ausgangswelle umfasst, die mit mindestens einer Laufkette (12) mechanisch verbunden ist;
einen Ventilationkreislauf der inneren Kammer (30, 314) des Gehäuses (14, 304), wobei der Ventilationkreislauf einen Lufteinlass und einen Luftauslass aufweist, die mit der Außenseite des Gehäuses (14, 304) kommunizieren, wobei der Ventilationkreislauf zum Aufrechterhalten einer Temperatur über dem Gefrierpunkt innerhalb der inneren Kammer (30, 314), wenn die Außentemperatur niedriger ist, und zum Kühlen des Inneren der inneren Kammer (30, 314). 314) wenn seine Temperatur über einer oberen Grenze liegt, dient;
**dadurch gekennzeichnet, dass** die Transportantriebseinheit (400) ferner umfasst:
zwei nebeneinander angeordnete Laufketten (12), die parallel entlang der Längsachse um das Gehäuse (14, 304) angeordnet sind, wodurch sich die Antriebseinheit (400) bewegen kann, wenn die Laufketten (12) um das Gehäuse (14, 304) angetrieben werden durch den mindestens einen Motor zum Antrieb (32, 310) angetrieben werden;
eine Transportplatte (402), die über den Laufketten (12) angeordnet ist und mit dem Gehäuse (14, 304) verbunden ist; und
eine Kipppritsche(410), die an der Transportplatte (402) angebracht ist.

2. Antriebseinheit (400) nach Anspruch 1, **dadurch gekennzeichnet, dass** sie Folgendes umfasst:
zwei Paare oberer Schienen (34), die in Längsrichtung an der oberen Wand (14a) des Gehäuses (14, 304) angeordnet sind;
zwei Paare unterer Schienen, die in Längsrichtung an der unteren Wand (14b) des Gehäuses (14, 304) angeordnet sind;
mindestens eine vordere Rolle (40), die drehbar an der Vorderseite des Gehäuses (14, 304) angebracht ist; und
mindestens eine hintere Rolle (50), die drehbar an der Rückseite des Gehäuses (14, 304) angebracht ist;
jede Laufkette (12) umfasst eine innere Fläche, die von den Schienen (34) und entsprechenden Rollen (40, 50) geführt wird.

3. Antriebseinheit (400) nach Anspruch 2, **dadurch gekennzeichnet, dass** sie ein Getriebe (60) umfasst, das mindestens einen Teil der mechanischen Verbindung zwischen dem Motor (32, 310) und der entsprechenden Laufkette (12) gewährleistet, das Getriebe (60) ist vorzugsweise mit der hinteren Walze (50) mechanisch verbunden.

4. Antriebseinheit (400) nach einem der Ansprüche 1 bis 3, **dadurch gekennzeichnet, dass** sie mindestens einen Generator (80) aufweist, der in der inneren Kammer (30, 314) angeordnet ist, wobei der Generator (80) vorzugsweise Elektrizität einer Spannung erzeugt, die einer Haushaltssteckdose entspricht.

5. Antriebseinheit (400) nach Anspruch 4, **dadurch gekennzeichnet, dass** der Generator (80) eine quer zur Längsachse des Gehäuses (14, 304) angeordnete Drehachse aufweist.

6. Antriebseinheit (400) nach Anspruch 5, **dadurch gekennzeichnet, dass** der mindestens eine Motor zum Antrieb ein Verbrennungsmotor (32) ist, und dass der Generator (80) und der Verbrennungsmotor (32) über eine elektrische Kupplung (84) mechanisch verbunden sind.

7. Antriebseinheit (400) nach einem der Ansprüche 1 bis 6, **dadurch gekennzeichnet, dass** die innere Kammer (30, 314), relativ zum Atmosphärendruck, auf einem positiven Druck gehalten wird.

8. Antriebseinheit (400) nach einem der Ansprüche 1 bis 7, **dadurch gekennzeichnet, dass** sie eine Lenkstange (20, 306) umfasst, die mit dem Gehäuse (14, 304) verbunden ist und sich im Wesentlichen nach hinten erstreckt, und dass die Antriebseinheit (400) vorzugsweise eine Bremse (66), die von der Lenkstange (20, 306) aus bedienbar ist, umfasst.

9. Antriebseinheit (400) nach einem der Ansprüche 1 bis 8, **dadurch gekennzeichnet, dass** sie ein Heizelement umfasst, das in der inneren Kammer (30, 314) angeordnet ist und von außen mit Strom versorgt werden kann um eine minimale Temperatur aufrechtzuerhalten, wenn die Antriebseinheit (400) nicht verwendet wird.

10. Antriebseinheit (400) nach Anspruch 9, **dadurch gekennzeichnet, dass** die Antriebseinheit (400) als Muldenkipper ausgebildet ist, wobei dieKipppritsche(410) vorzugsweise durch eine motorisierte Vorrichtung (430) mechanisch schwenkbar ist, die auf der Antriebseinheit (400) angeordnet ist.

11. Antriebseinheit (400) nach einem der Ansprüche 1 bis 10, **dadurch gekennzeichnet, dass** die Antriebseinheit (400) eine hintere Plattform (420) zum Transport eines Bedieners (22, 308) umfasst.

12. Antriebseinheit (400) nach einem der Ansprüche 1 bis 11, **dadurch gekennzeichnet, dass** das Gehäuse (14, 304) abnehmbare Seitenwände (16) aufweist.

13. Antriebseinheit (400) nach einem der Ansprüche 1 bis 12, **dadurch gekennzeichnet, dass** die Antriebseinheit (400) eine Halterung (210) zum Aufnehmen eines Endes einer Anhängerkupplung (202) eines Schlittens (200) aufweist.

14. Antriebseinheit (400) nach Anspruch 13, **dadurch gekennzeichnet, dass** die Halterung (210) eine Querstange umfasst, die mit der Oberseite des Gehäuses (14, 304) verbunden ist, wobei die Querstange und das Ende der Anhängerkupplung (202) vorzugsweise verschiebbar verbunden sind.

15. Antriebseinheit (400) nach einem der Ansprüche 1 bis 14, **dadurch gekennzeichnet, dass** das Gehäuse (14, 304) zumindest teilweise aus Aluminium ist.

## Claims

1. A transport drive unit (400) including:
a watertight elongated housing (14, 304) extending along a longitudinal axis and defining an inner chamber (30, 314), the housing (14, 304) including a top wall (14a) and a bottom wall (14b);
at least one track-driving motor (32, 310), the motor (32, 310) being located in the inner chamber (30, 314) of the housing (14, 304) and including an output shaft that is mechanically connected to at least one track (12);
a ventilation circuit for the inner chamber (30, 314) of the housing (14, 304), the ventilation circuit including an air inlet and an air outlet which communicate with outside of the housing (14, 304), the ventilation circuit allowing the interior of the inner chamber (30, 314) to be kept above the freezing point when the outside temperature is lower and allowing the interior of the inner chamber (30, 314) of the housing (14, 304) to be cooled when its temperature is above an upper threshold;
**characterized in that** the drive unit (400) further includes:
two juxtaposed tracks (12), disposed in parallel around the housing (14, 304) along its longitudinal axis, allowing the drive unit (400) to move when the tracks (12) are driven in rotation around the housing (14, 304) by said at least one track-driving motor (32, 310);
a transport rack (402) located above the tracks (12) and that is connected to the housing (14, 304); and
a dump body (410) provided on the transport rack (402).

2. The drive unit (400) according to claim 1, **characterized in that** it includes:
two pairs of top skids (34) disposed longitudinally on the top wall (14a) of the housing (14, 304);
two pairs of bottom skids disposed longitudinally on the bottom wall (14b) of the housing (14, 304);
at least one front roller (40) rotatably connected at the front of the housing (14, 304); and;
at least one rear roller (50) rotatably connected at the rear of the housing (14, 304);
each track (12) including an inner face which is supported by the corresponding skids (34) and the corresponding rollers (40, 50).

3. The drive unit (400) according to claim 2, **characterized in that** it includes a transmission (60) which forms at least part of the mechanical connection between the motor (32, 310) and the corresponding track (12), the transmission (60) being preferably mechanically connected to the rear roller (50).

4. The drive unit (400) according to any one of claims 1 to 3, **characterized in that** it includes at least one generator (80) located within the inner chamber (30, 314), the generator (80) preferably outputting electricity at a voltage corresponding to that of a domestic power outlet.

5. The drive unit (400) according to claim 4, **characterized in that** the generator (80) includes a rotation axis disposed transversely to the longitudinal axis of the housing (14, 304).

6. The drive unit (400) according to claim 5, **characterized in that** said at least one track-driving motor is an internal-combustion engine (32), and **in that** the generator (80) and the internal-combustion engine (32) are mechanically connected through an electric clutch (84).

7. The drive unit (400) according to any one of claims 1 to 6, **characterized in that** the inner chamber (30, 314) is maintained at a positive pressure with reference to the atmospheric pressure.

8. The drive unit (400) according to any one of claims 1 to 7, **characterized in that** it includes a handlebar (20, 306) connected to the housing (14, 306) and that extends substantially rearwards, the drive unit (400) preferably including a brake (66) that can be operated from the handlebar (20, 306).

9. The drive unit (400) according to any one of claims 1 to 8, **characterized in that** it includes a heating element located in the inner chamber (30, 314) and that can be powered with outside electricity to maintain a minimum temperature when the drive unit (400) is not in use.

10. The drive unit (400) according to claim 9, **characterized in that** the drive unit (400) is configured for use as a dumper, the dump body (410) being preferably mechanically tilted using a motorized arrangement (430) provided on the drive unit (400).

11. The drive unit (400) according to any one of claims 1 to 10, **characterized in that** the drive unit (400) includes a rear platform (420) to transport an operator (22, 308).

12. The drive unit (400) according to any one of claims 1 to 11, **characterized in that** the housing (14, 304) includes removable lateral walls (16).

13. The drive unit (400) according to any one of claims 1 to 12, **characterized in that** the drive unit (400) includes a support (210) for receiving an end of a hitch (202) for a sled (200).

14. The drive unit (400) according to claim 13, **characterized in that** the support (210) includes a transversal strut connected to the top of the housing (14, 304), the transversal strut and the end of the hitch (202) being preferably slidingly connected.

15. The drive unit (400) according to any one of claims 1 to 14, **characterized in that** the housing (14, 304) is at least partially made of aluminum.
